# EUROPÄISCHE PATENTSCHRIFT

(11) **EP 1 138 363 B1**
(45) Veröffentlichungstag und Bekanntmachung des Hinweises auf die Patenterteilung: **05.01.2005**
(21) Anmeldenummer: 01106509.1
(22) Anmeldetag: 15.03.2001
(51) Int. Cl.: B01D 21/24, B01D 17/032

(54) **Vorrichtung zum Abziehen von gereinigtem Wasser aus einem Behälter bei der biologischen Reinigung von Abwasser**
Device for withdrawing purified water from a container in the biological purification of waste water
Dispositif de soutirage d'eau purifiée d'un récipient lors de la purification biologique d'eaux usées

(30) Priorität: 30.03.2000 DE 20005896 U
(43) Veröffentlichungstag der Anmeldung: 04.10.2001
(73) Patentinhaber: Bionik GmbH - Innovative Technik für die Umwelt, 65232 Taunusstein (DE)
(72) Erfinder: Richter, Michael, 65527 Niedernhausen (DE)
(74) Vertreter: Patentanwälte Möll und Bitterich

(56) Entgegenhaltungen:
- WO-A-99/19040
- DE-A- 2 406 857
- DE-A- 3 202 354
- US-A- 4 891 128

## Beschreibung

### Technisches Gebiet

Die Erfindung betrifft eine Vorrichtung und ein Verfahren zum Abziehen von gereinigtem Wasser aus einem Behälter bei der biologischen Reinigung von Abwasser.

### Stand der Technik

Kompaktkläranlagen oder Einbecken-Kläranlagen werden meist nach dem sogenannten Belebtschlammverfahren betrieben. Charakteristisch für dieses Klärverfahren ist, dass das Abwasser mit abbauaktiven Kleinstlebewesen, dem sogenannten Belebtschlamm, vermischt und belüftet wird. Dadurch wird aus schmutzigem Abwasser eine klare, saubere Flüssigkeit. Bevor das geklärte Abwasser jedoch die Kläranlage verlässt, muss es von dem Belebtschlamm getrennt werden, der seinerseits nach Bedarf abgepumpt wird.

Anstelle der bei dieser Klärtechnik sonst üblichen Kombination von Belebungsbecken und Nachklärbecken werden bei der Einbecken-Klärtechnik diese beiden Funktionen nicht räumlich, sondern zeitlich voneinander getrennt. Das Aufstau-Verfahren macht es möglich, tagsüber das zufließende Abwasser unter gleichzeitiger Belüftung zu speichern, während in der späten Nacht, wenn kaum Abwasser zufließt, bei abgeschalteter Belüftung der Belebtschlamm sedimentiert und somit vom geklärten Abwasser getrennt wird. Das gereinigte Abwasser, das sogenannte Klarwasser, wird, wenn ein Ablaufrohr tief genug angeordnet werden kann, durch freien Ablauf, wenn nicht mittels einer Pumpe aus dem Behälter abgefördert. Die Entnahme des gereinigten Abwassers wird kurz vor Erreichen des Belebtschlammspiegels beendet; danach kann ein neuer Aufbereitungszyklus beginnen.

Um die Nachteile fest installierter Pumpen, sei es als Tauchpumpe oder sei es als höhenverstellbare Pumpe zu vermeiden, ist es bekannt, die Pumpe zum Abfördern des Klarwassers an einem aus einem Rohr gebildeten Schwenkarm um eine horizontale Achse schwenkbar anzuordnen (DE 297 10 398 U). Damit hat die Pumpe die Möglichkeit, sich schwimmend unterschiedlichen Wasserspiegelhöhen anzupassen. Der rohrförmige Schwenkarm bildet dabei im Gegensatz zu flexiblen Schlauchleitungen eine starre Einheit ohne die Gefahr von Verschleißerscheinungen.

Unabhängig von der Höhenlage der Einlauföffnung für das Abzugsrohr und auch unabhängig davon, ob das Klarwasser mittels natürlichen Gefälles oder mittels einer Pumpe abgezogen wird besteht das Problem im Bereich der Einlauföffnung eine starke Strömung zu vermeiden um zu verhindern, dass etwa noch im Klarwasser befindliche Schweb- oder Sinkstoffteilchen oder in den Grenzbereichen zu auf dem Wasserspiegel schwimmendem Schwimmschlamm oder dem bereits abgesetzten Belebungsschlamm befindliche Teilchen in das Abzugsrohr mitgerissen werden. Dieses Problem kann durch die in Stand der Technik bekannte Ausführung der Einlauföffnung als Trichter vermieden werden (S. z.B. DE-A-2 406 857).

### Aufgabe der Erfindung

Vor diesem Hintergrund liegt der Erfindung die Aufgabe zugrunde, den Einlaufbereich des Abzugsrohres so zu gestalten, dass die Einlauföffnung immer unterhalb des Flüssigkeitsspiegels angeordnet ist, um das Abzichen von an der Flüssigheitsoberfläche aufschwimmendem Schlaum an verweiden.

### Darstellung der Erfindung

Gemäß der Erfindung wird diese Aufgabe durch die im Anspruch 1 angegebenen Merkmale gelöst.

Vorteilhafte Weiterbildungen ergeben sich aus den Unteransprüchen.

Gemäß der Erfindung wird dem Abzugsrohr für das Klarwasser ein Einlaufbereich vorgeschaltet, der im wesentlichen trichterförmig gestaltet ist. Dabei wird in einer ersten Stufe in einem an die Einlauföffnung anschließenden Bereich eine Verengung der flachrechteckigen Einlauföffnung in vertikaler Richtung auf einen Einlaufkanal vorgenommen, wobei sich dieser in Querrichtung durchströmte Einlaufkanal dann nach Überwindung einer Überlaufschwelle in einen zweiten Auslaufkanal in horizontaler Richtung auf die zentral hierzu angeordnete, meist kreisförmige Öffnung des Abzugsrohres verengt. Dabei ist es gleichgültig, ob der Klarwasserabzug im freien Gefälle oder mittels einer Pumpe erfolgt.

Durch diese Gestaltung des Einlaufbereiches wird erreicht, dass sich die zum Abzugsrohr führende Ansaugströmung in dem dem Einlaufkopf vorgelagerten Bereich langsam steigert, bis sie im Querschnitt der Einlauföffnung einen bestimmten, noch tolerierbaren Wert erreicht und sich erst im Bereich der Verengung des Einlaufquerschnitts bis zu der stärksten Strömung im Abzugsrohr steigert.

Die gattungsgemäße Ausgestaltung der erfindungsgemäßen Vorrichtung mit einem um eine horizontale Achse schwenkbaren Abzugsrohr bildet die Grundlage für eine vorteilhafte Weiterbildung der Erfindung, nämlich den Gedanken, den Einlaufkopf während des Befüllens des Behälters und des Sedimentierens durch Verschwenken des Abzugsrohres vollständig aus der Flüssigkeit herauszuhalten und erst für den Abzug des gereinigten Wassers in die Flüssigkeit abzusenken. Hierdurch wird, ohne dass Verschlussvorrichtungen oder dergleichen erforderlich wären, vermieden, dass im Klarwasser befindliche Schwebteilchen oder Schwimmschlamm in das Abzugsrohr gelangen.

### Beschreibung der Zeichnung

Die Erfindung wird nachstehend anhand der Zeichnung näher erläutert. Es zeigt
- Fig. 1: einen Teillängsschnitt durch einen Klärbehälter mit Klarwasserabzug mit natürlichem Gefälle,
- Fig. 2: einen der Fig. 1 entsprechenden Querschnitt mit Klarwasserabzug mit Pumpenunterstützung,
- Fig. 3: den Einlaufkopf gemäß Detail III in Fig. 1 in größerem Maßstab während des Klarwasserabzugs,
- Fig. 4: einen Schnitt durch den Einlaufkopf entlang der Linie IV-IV in Fig. 3,
- Fig. 5: den Einlaufkopf während der Abzugsphase in der höchsten Position und
- Fig. 6: in der tiefsten Position,
- Fig. 7: eine andere Ausführungsform des Einlaufkopfes analog zu Fig. 3,
- Fig. 8: einen Schnitt durch den Einlaufkopf entlang der Linie VIII-VIII in Fig. 7 sowie die
- Fig. 9 bis 11: diesen Einlaufkopf in unterschiedlichen Arbeitsphasen.

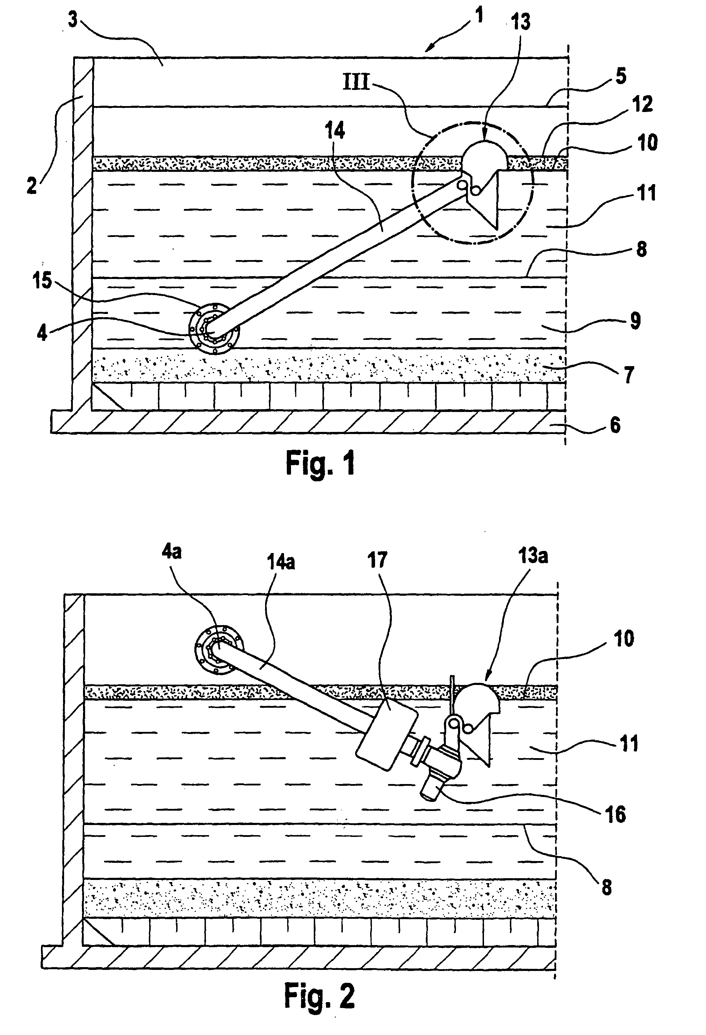

In den Fig. 1 und 2 ist die erfindungsgemäße Vorrichtung zunächst in einem Ausschnitt aus einem Vertikalschnitt durch einen Klärbehälter in zwei Versionen dargestellt.

Im Ausführungsbeispiel gemäß Fig. 1 ist der Klärbehälter 1 ein Rechteckbehälter aus Stahlbeton, von dem nur der Eckbereich zwischen einer Stirnwand 2 und einer Längswand 3 dargestellt ist. Der Behälter 1 besitzt im Bereich einer der nicht dargestellten Wände einen Zulauf und in der Längswand 3 einen Ablauf 4 in Gestalt eines die Wand durchbrechenden Ablaufrohres. Der Einsatz der Erfindung ist aber selbstverständlich nicht an eine bestimmte Behälterform oder ein bestimmtes Material für die Behälterwände gebunden.

Wenn der Behälter 1 den Reaktor einer nach dem Belebtschlammverfahren arbeitenden Kompaktkläranlage darstellt, dann läuft durch den - nicht dargestellten - Zulauf während des Verlaufs eines Tages Abwasser zu; der maximal mögliche Wasserspiegel ist bei 5 angedeutet. Durch Belebtschlammflocken, die in dem in dem Behälter 1 befindlichen Abwasser angesiedelt sind und das durch zeitweise Belüftung mittels entsprechender Rührwerke durchmischt und mit Sauerstoff versorgt wird, werden die im Abwasser enthaltenen organischen Bestandteile in Biomasse umgesetzt, die als Klärschlamm nach unten sinkt. Oberhalb des auf der Beckensohle 6 abgesetzten Belebungsschlammes 7 kann bis zu einem minimalen Wasserspiegel 8 ein Sicherheitsbereich 9 vorgesehen sein, so dass sich der Wasserspiegel 10 des gereinigten Wassers 11 zwischen dem maximalen Wasserspiegel 5 und dem minimalen Wasserspiegel 8 bewegt. Oberhalb des Klarwasserspiegels 10 kann sich noch Schwimmschlamm 12 angesammelt haben.

Zum Abziehen des Klarwassers 11 zwischen dem maximalen Wasserspiegel 5 und dem minimalen Wasserspiegel 8 ist ein Einlaufkopf 13 vorgesehen. Der Einlaufkopf 13 befindet sich am oberen Ende eines Abzugsrohres 14, dessen unteres Ende mittels eines Rohrgelenks 15 um das die Wand 3 durchsetzende Ablaufrohr 4 schwenkbar ist.

Im Ausführungsbeispiel der Fig. 1 ist unterstellt, dass der Ablauf 4 unterhalb des minimalen Wasserspiegels 8 liegt, so dass das Klarwasser 11 in natürlichem Gefälle abgezogen werden kann. Im Ausführungsbeispiel der Fig. 2 liegt der Ablauf 4a in der Nähe des maximalen Wasserspiegels 5; zum Abzug des Klarwassers ist hier am Einlaufkopf 13a eine Pumpe 16 angeordnet, deren Gewicht durch einen am Abzugsrohr 14a angeordneten Schwimmkörper 17 kompensiert wird.

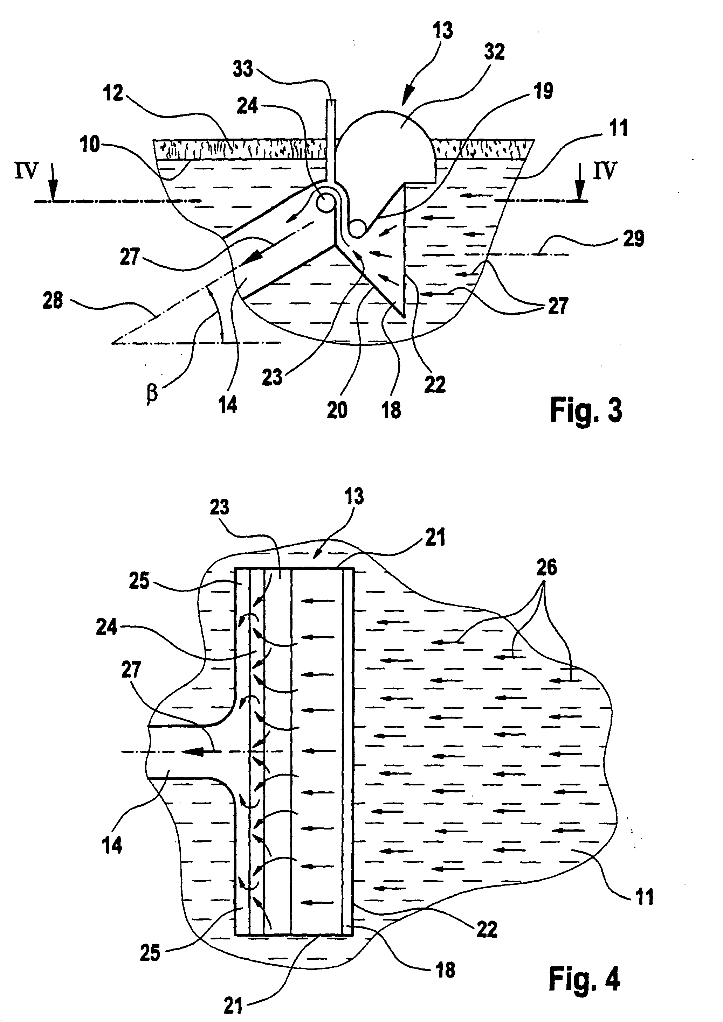

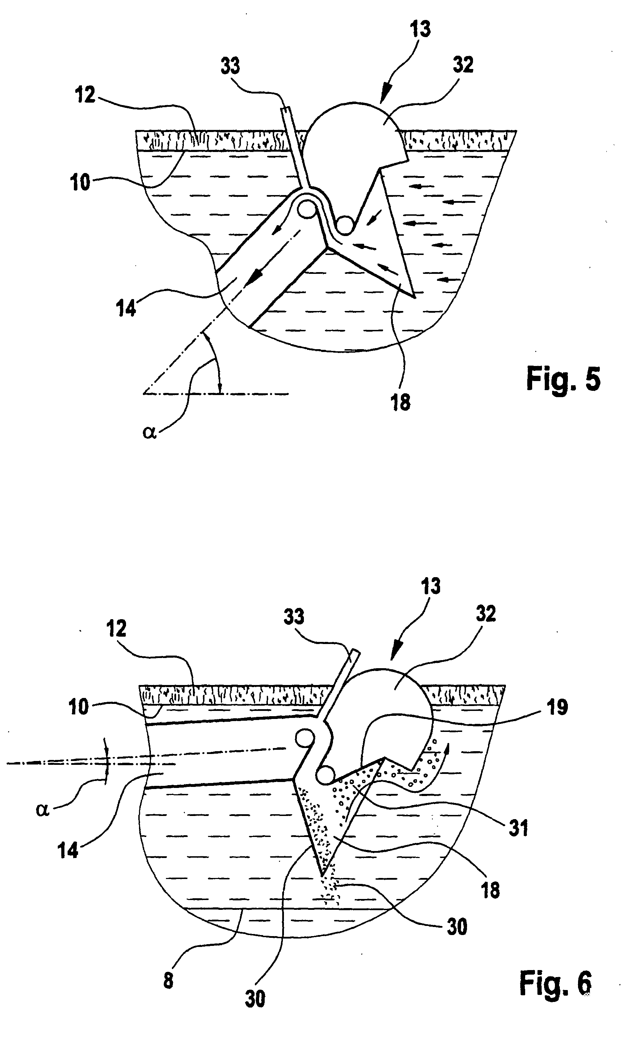

In den Fig. 3 und 4 ist der Einlaufkopf 13 gemäß Detail III in Fig. 1 im Zustand des Klarwasserabzugs in größerem Maßstab dargestellt; die Fig. 5 und 6 zeigen den Einlaufkopf 13 in der Abzugsphase, und zwar in der höchsten bzw. tiefsten Position.

Der Einlaufkopf 13 besteht im wesentlichen aus einem Einlauftrichter 18, der durch zwei zueinander geneigte Längswände, eine obere Trichterwand 19 und eine untere Trichterwand 20 sowie zwei vertikale Stirnwände 21 begrenzt wird. Der Einlauftrichter 18 bildet so eine flachrechteckige, zum Klarwasser 11 hin geöffnete Einlauföffnung 22, die sich zum Grunde hin zu einem schmalen Einlaufkanal 23 verengt. Die durch den Einlauftrichter 18 eingeströmte Flüssigkeit durchströmt den Einlaufkanal 23 in Querrichtung und gelangt nach Überströmen einer Überlaufschwelle 24 in einen parallel verlaufenden Auslaufkanal 25, den sie von den Stirnwänden 19 hin zu dem im zentralen Bereich angeordneten Abzugsrohr 14 hin gegensinnig in Längsrichtung durchströmt (Fig. 4). Die vom Klarwasserbereich vor der Einlauföffnung 22 über den Einlauftrichter 18 bis zum Abzugsrohr 14 an Geschwindigkeit zunehmende Strömung ist in den Fig. 3 und 4 durch zunehmende Größe und Stärke von die Strömung andeutenden Pfeilen 26 und 27 symbolisiert.

Um angesichts der Verschwenkung des Abzugsrohrs 14 um den Winkel α zwischen der höchsten und der tiefsten Position des Klarwasserabzugs (Fig. 5 und Fig. 6) in jedem Fall optimale Abzugsbedingungen zu gewährleisten, ist der Einlauftrichter 18 gegenüber der Achse 28 des Abzugsrohrs 14 um den Winkel β verschwenkt. Der Winkel β kennzeichnet den Winkel zwischen der Achse 28 des Abzugsrohrs 14 und der Symmetrieachse 29 des Einlauftrichters 18.

Im Falle des unten liegenden Ablaufs 4 gemäß Fig. 1 hat dies in der Füll- und Belüftungsphase des Behälters 1 den in Fig. 6 angedeuteten Vorteil, dass Sinkstoffe 30, die etwa in den Einlauftrichter 18 eindringen könnten, an der unteren Trichterwand 22 entlang zu Boden sinken können, während Schwebstoffe 31 an der oberen Trichterwand 19 nach oben umgelenkt werden und aufsteigen können; sie bilden dann den Schwimmschlamm 12.

Um den Einlaufkopf 13 jeweils in der günstigsten Position zu halten, ist er mit einem Schwimmkörper 32 versehen. Der Schwimmkörper 32 ist erfindungsgemäß oberhalb des Einlauftrichters 18 angeordnet; er kann zugleich die obere Trichterwand 19 bilden und abnehmbar sein, so dass bei abgenommenem Schwimmkörper 32 der Einlauftrichter, insbesondere auch der Einlaufkanal 23 für Reinigungszwecke zugänglich sind. In den Einlaufkanal 23 mündet an seiner höchsten Stelle ein Entlüftungsröhrchen 33.

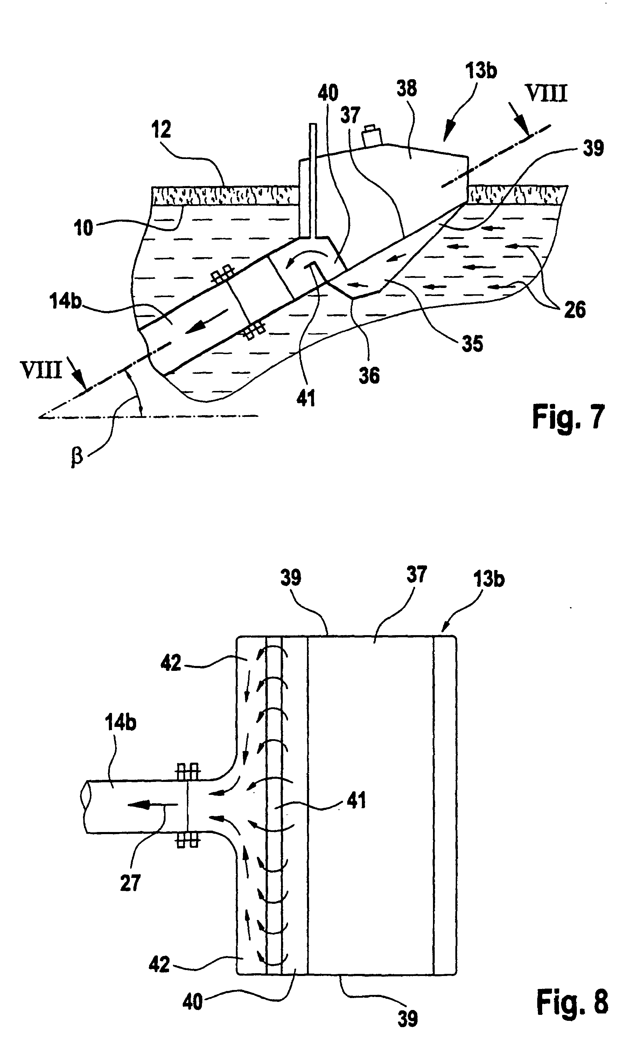

In den Fig. 7 und 8 ist eine andere Ausführungsform eines Einlaufkopfes 13b dargestellt. Auch dieser Einlaufkopf 13b besitzt einen etwa trichterförmig ausgebildeten Einlaufbereich 35, der nach unten durch eine abgekröpfte Wand 36, nach oben durch das Bodenblech 37 des Schwimmkörpers 38 und an den Stirnseiten durch Führungsbleche 39 gebildet ist. Die einströmende Flüssigkeit gelangt nach Passieren des Einlaufbereichs 35 in einen schmalen Einlaufkanal 40, den sie in Querrichtung durchströmt, um nach Passieren einer Überlaufschwelle 41 in einen Auslaufkanal 42 zu gelangen, den sie gegensinnig in Längsrichtung durchströmt, um zu dem im zentralen Bereich des Einlaufkopfes 13b angeschlossenen Abzugsrohr 14b zu gelangen (Fig. 8). Auch die Gestaltung dieses Einlaufkopfes 13b erfüllt die Bedingung, dass die im Einlaufbereich 35 noch recht langsame Strömung der Flüssigkeit sich zunächst zum Einlaufkanal 40 hin und nach Überströmen der Überlaufschwelle 41 in dem Auslaufkanal 42 bis hin zum Abzugsrohr 14b steigert, was auch hier wiederum durch unterschiedliche Größe der Pfeile 26 und 27 symbolisiert ist.

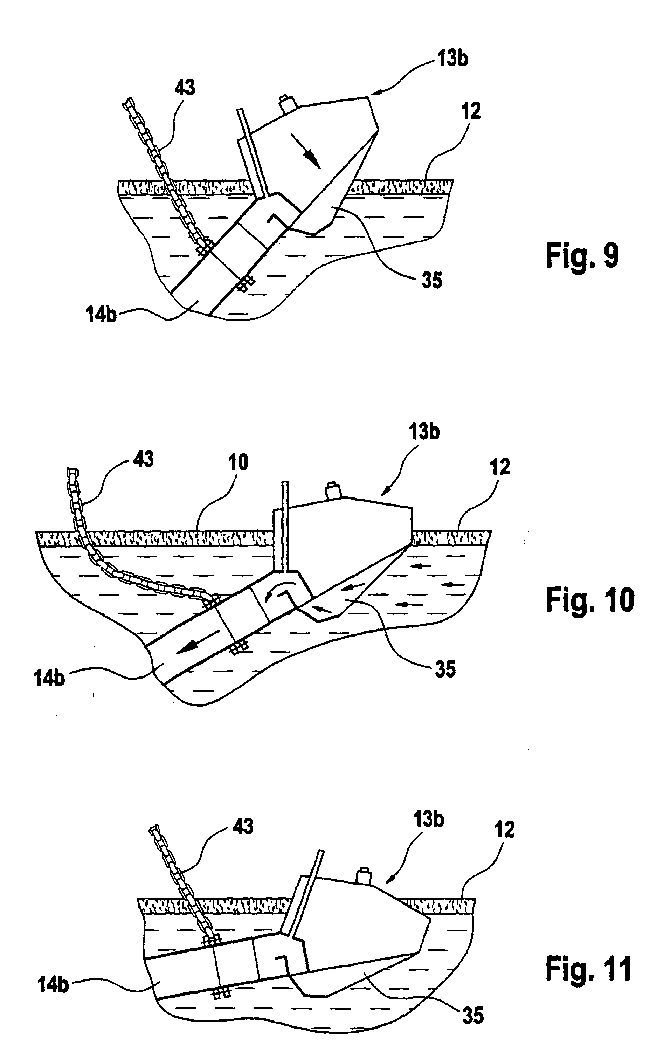

Um zu verhindern, dass bei dem taktweisen Betrieb einer derartigen Einbecken-Kläranlage mit Aufstau und Belüftung, Sedimentation und Abzug des Klarwassers bei ständig in der Flüssigkeit eingetauchtem Einlaufkopf ungeklärte Flüssigkeit abfließen kann, was auch durch Verschließen des Ablaufs oder Abstellen der Pumpe nicht immer mit Sicherheit ausgeschlossen werden kann, besteht erfindungsgemäß die Möglichkeit, den Einlaufkopf 13b, der an dem Abzugsrohr 14b ohnehin schwenkbar befestigt ist, zum Beispiel durch ein daran befestigtes Zugglied 43, vorzugsweise eine Kette, die zu einer oberhalb angeordneten Winde führt, heb- und senkbar zu machen, um ihn bei Nichtgebrauch vollständig aus der Flüssigkeit herausheben zu können. Eine derartige Möglichkeit ist in den Fig. 9 bis 11 dargestellt.

Während eine vollständige Heraushaltung des Einlaufkopfes aus der Flüssigkeit nicht eigens dargestellt ist, zeigt Fig. 9 das Absenken des Einlaufkopfes 13b mittels einer Kette 43 in der Phase des Durchdringens der Schwimmschlammschicht 12. Das Absenken des Einlaufkopfes 13b bis zur Schwimmlage vollzieht sich relativ schnell, so dass keine Gefahr besteht, dass etwa Teile des Schwimmschlammes 12 in das Abzugsrohr 14b geraten, dies um so weniger, als diese beim Durchdringen der Schwimmschlammschicht 12 durch das Bodenblech 36 des Einlauftrichters und das Bodenblech 37 des Schwimmkörpers 38 beiseite geschoben werden.

Fig. 10 zeigt den durch den Schwimmkörper 38 auf dem Flüssigkeitsspiegel 10 schwimmend gehaltenen Einlaufkopf 13b während des Klarwasserabzugs; die Kette 43 ist hier spannungslos. Dies ist der Zustand, der auch in Fig. 6 dargestellt ist.

Fig. 11 schließlich zeigt die Lage am Ende des Klarwasserabzugs, kurz bevor der Einlaufkopf 13b mittels der nun wieder gespannten Kette 43 aus der Flüssigkeit herausgehoben wird, um in einer Lage oberhalb des maximalen Flüssigkeitsspiegels 5 zu verharren, bis der nächste Klarwasserabzug ansteht.

## Patentansprüche

1. Vorrichtung zum Abziehen von gereinigtem Wasser aus einem Behälter bei der biologischen Reinigung von Abwasser
mit einem Einlaufkopf (13, 13a, 13b), der, durch einen Schwimmkörper (32, 17, 38) gehalten, den Schwankungen des Wasserspiegels (10) folgend am Ende eines um eine horizontale Achse schwenkbaren Abzugsrohres (14, 14a, 14b) angeordnet ist,
wobei der Einlaufkopf (13, 13a, 13b) etwa trichterförmig sich von einer Einlauföffnung (22, 35) auf den Querschnitt des Abzugsrohres (14, 14a, 14b) verengend ausgebildet ist und die Einlauföffnung (22, 35) flach rechteckig gestaltet ist, wobei die längeren Seiten parallel zum Wasserspiegel (10) verlaufen
**dadurch gekennzeichnet, dass** der Schwimmkörper (32, 38) an dem Einlaufkopf (13, 13b) oberhalb des Einlauftrichters (18) angeordnet ist.

2. Vorrichtung nach Anspruch 1, **dadurch gekennzeichnet, dass** der Schwimmkörper (32, 38) die obere Abdeckung (19, 37) des Einlauftrichters (22, 35) bildet.

3. Vorrichtung nach Anspruch 1 oder 2, **dadurch gekennzeichnet, dass** der Schwimmkörper (32, 38) am Einlaufkopf (13, 13b) lösbar befestigt ist.

4. Vorrichtung nach einem der Ansprüche 1 bis 3, **dadurch gekennzeichnet, dass** der Einlaufbereich von der Einlauföffnung (22) ausgehend etwa trichterförmig in vertikaler Richtung zu einem in Querrichtung durchströmten Einlaufkanal (23, 40) verengt ist.

5. Vorrichtung nach Anspruch 4, **dadurch gekennzeichnet, dass** der Einlaufkanal (23, 40) abströmseitig durch eine Überlaufschwelle (24, 41) begrenzt ist, an die ein parallel verlaufender Auslaufkanal (25, 42) anschließt, in den das Abzugsrohr (14, 14a, 14b) mündet und der von der abzuziehenden Flüssigkeit in Längsrichtung durchströmt wird.

## Claims

1. An apparatus for draining off purified water from a tank in the biological purification of waste water, with an inlet head (13,13a,13b) which, retained by a float (32,17,38), is arranged to follow the fluctuations in the water level (10) at the end of a drain pipe (14, 14a, 14b) which is pivotable about a horizontal axis,
wherein the inlet head (13,13a,13b) is approximately funnel-shaped narrowing from an inlet opening (22,35) to the cross-section of the drain pipe (14,14a,14b), and the inlet opening (22,35) is of flat rectangular shape, the longer sides extending parallel to the water level (10), **characterised in that** the float (32,38) is disposed on the inlet head (13,13b) above the inlet funnel (18).

2. An apparatus according to Claim 1, **characterised in that** the float (32,38) forms the upper cover (19,37) of the inlet funnel (22,35) [sic].

3. An apparatus according to Claim 1 or 2, **characterised in that** the float is mounted detachably on the inlet head (13, 13a, 13b).

4. An apparatus according to any one of Claims 1 to 3, **characterised in that** starting from the inlet opening (22) the inlet zone is narrowed approximately funnel-like in a vertical direction to an inlet passage (23,40) through which the flow passes in a transverse direction.

5. An apparatus according to Claim 4, **characterised in that** the inlet passage (23,40) is bounded on the outflow side by an overflow edge (24,41) which is adjoined by an outlet passage (25,42) extending parallel thereto, into which the drain pipe (14,14a,14b) discharges and through which the liquid to be drained off flows in a longitudinal direction.

## Revendications

1. Dispositif de soutirage d'eau purifiée d'un récipient lors de la purification biologique d'eaux usées,
avec une tête de prise d'eau (13, 13a, 13b) disposée sur l'extrémité d'un tube de soutirage (14, 14a, 14b) pivotant autour d'un axe horizontal, maintenu par un corps flottant (32, 17, 038) qui suit les variations de la surface de l' eau (10),
la tête de prise d'eau (13, 13a, 13b) étant quasiment conformée en entonnoir, partant d'une ouverture de prise d'eau (22, 35) se rétrécissant jusqu'à la section du tube de soutirage (14, 14a, 14b), et avec une ouverture de prise d'eau (22, 35) conçue de manière plane et rectangulaire, les côtés les plus longs s'étendant parallèlement à la surface de l'eau (10)
**caractérisé en ce que** le corps flottant (32, 38) est disposé sur la tête de prise d'eau (13, 13b), au-dessus de l'entonnoir de prise d'eau (18).

2. Dispositif selon la revendication 1, **caractérisé en ce que** le corps flottant (32, 38) forme le couvercle supérieur (19, 37) de l'entonnoir de prise d' eau (22, 35).

3. Dispositif selon la revendication 1 ou 2 **caractérisé en ce que** le corps flottant (32, 38) est fixé de manière amovible sur la tête de prise d'eau (13, 13b).

4. Dispositif selon l'une des revendications 1 à 3 **caractérisé en ce que** la zone de prise d'eau se rétrécit à partir de l'ouverture (22) quasiment en forme d'entonnoir dans le sens vertical vers le canal de prise d'eau (23, 40) traversé transversalement par un flux.

5. Dispositif selon la revendication 4 **caractérisé en ce que** le canal de prise d'eau (23, 40) est limité du côté de l'écoulement par un seuil de déversement (24,41), prolongé par un canal d'écoulement (25, 42) au tracé parallèle, dans lequel débouche le tube de soutirage (14, 14a, 14b) traversé dans le sens longitudinal par le liquide à soutirer.
